# EUROPEAN PATENT SPECIFICATION

(11) **EP 3 171 608 B1**
(45) Date of publication and mention of the grant of the patent: **15.06.2022**
(21) Application number: 15893540.3
(22) Date of filing: 14.12.2015
(51) Int. Cl.: H04N 21/436, H04N 21/458, H04N 21/485

(54) **PLAYING DEVICE GROUPING CONTROL METHOD AND USER TERMINAL**
SPIELVORRICHTUNGSGRUPPIERUNGSSTEUERUNGSVERFAHREN UND BENUTZERENDGERÄT
PROCÉDÉ DE COMMANDE DE GROUPEMENT DE DISPOSITIFS DE LECTURE, ET TERMINAL D'UTILISATEUR

(30) Priority: 25.08.2015 CN 201510527461
(43) Date of publication of application: 24.05.2017
(73) Proprietor: GUANGDONG OPPO MOBILE TELECOMMUNICATIONS CORP., LTD., Wusha, Chang'an Dongguan, Guangdong 523860 (CN)
(72) Inventor: LIN, Shangbo, Dongguan Guangdong 523860 (CN)
(74) Representative: Mewburn Ellis LLP
(86) International application number: PCT/CN2015/097254
(87) International publication number: WO 2017/031870

(56) References cited:
- EP-A1- 2 879 396
- CN-A- 101 964 822
- CN-A- 102 447 948
- CN-A- 104 244 076
- CN-A- 104 396 268
- US-A1- 2007 171 198
- US-A1- 2013 082 827
- US-A1- 2014 115 114
- US-A1- 2014 380 159
- US-A1- 2015 140 990

## Description

### TECHNICAL FIELD

The present disclosure relates to communication technology field, and particularly, to a grouping control method of a playing device and a terminal.

### BACKGROUND

With the development of Internet technology and playing device, a wireless music system including a plurality of playing devices is becoming more and more popular. To facilitate users to control multiple playing devices within the wireless music system to perform the same operation synchronously, the playing devices can be grouped by user, and the playing devices required performing the same operation will be divided into one group. The user can control all playing devices of a group by controlling the group, and it is convenient for the user to control the playing device. Currently, there is no solution about how to divide playing devices into groups.

Document US 2015/140990 A1 describes grouping devices in a home network based on monitoring the device states.

Document US 2014/115114 A1 describes detecting a working state of a device in a home network and if the device is in a playing state not to control the device for playback. Document US 2014/380159 A1 detects inactive devices in a group and automatically sends a start signal to the device based on a user's proximity.

Document US 2007/171198 A1 describes sending a request for control of a device in a home network and displaying a message to allow a user permit control of the device to be transferred.

### SUMMARY

The present disclosure provides a grouping control method of a playing device and a terminal, through which the playing device can be grouped according to the working state thereof flexibly.

According to the present disclosure, it is provided a grouping control method of a playing device and a terminal according to the attached claims.

According to embodiments of the present disclosure, after receiving the grouping command for adding the target playing device in the playing device list to the group list, the terminal will respond to the grouping command and detect the working state of the target playing device and add the target playing device to the target group according to the working state detected. With aid of technical schemes of the present disclosure, the playing device can be grouped according to the working state thereof flexibly.

Other aspects and advantages of the present disclosure will be given below, which will become apparent from the following description or through the practice of the present disclosure.

### BRIEF DESCRIPTION OF THE DRAWINGS

The above mentioned and/or other aspects and advantages of the present disclosure will become clear and easy to understand from the embodiments described in conjunction with the accompanying drawings.
FIG. 1 is a schematic diagram illustrating system architecture according to an embodiment of the present disclosure;
FIG. 2 is a flowchart illustrating a grouping control method of a playing device according to an embodiment of the present disclosure;
FIG. 3 is a flowchart illustrating another grouping control method of a playing device according to an embodiment of the present disclosure;
FIG. 4 is a structure schematic diagram illustrating a terminal according to an embodiment of the present disclosure;
FIG. 5 is a structure schematic diagram illustrating another terminal according to an embodiment of the present disclosure;
FIG. 6 is a structure schematic diagram illustrating another terminal according to an embodiment of the present disclosure; and
FIG. 7 is a structure schematic diagram illustrating another terminal according to an embodiment of the present disclosure.

### DETAILED DESCRIPTION OF ILLUSTRATED EMBODIMENTS

Technical solutions of the embodiments of the present disclosure will now be described clearly and completely taken in conjunction with the accompanying drawings; it will be apparent to one of ordinary skill in the art that, the embodiments described below are merely a part of the disclosure and other embodiments obtained out of them without creative work will fall into the protection scope of the present disclosure either.

Embodiments of the present disclosure relate to a grouping control method of a playing device and a terminal, through which a playing device can be grouped according to the working state thereof flexibly. It is hereinafter described in detail.

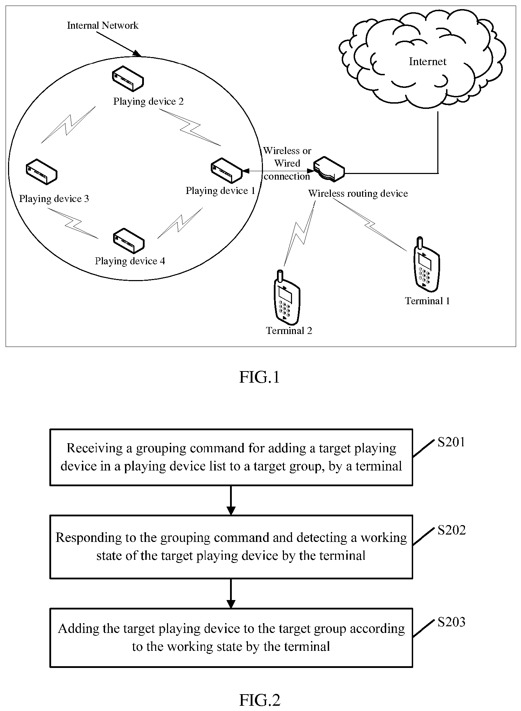

FIG. 1 is a schematic diagram of system architecture according to an embodiment of the present disclosure. As illustrated in FIG. 1, the system architecture may include a plurality of playing devices, a wireless routing device, and a plurality of terminals, the playing device may include but not limited to a speaker, MP4, MP3, multimedia device or any playing function enabled device. The wireless routing device may include but not limited to a wireless router or any wireless coverage function enabled device. The terminal may include smart phone, tablet PC, laptop computer, handheld computer, mobile Internet device (MID) or other smart devices. In the system architecture illustrated in FIG. 1, communication connection among playing devices is established in a wireless manner (such as AD-HOC network form or MESH network form). Among these playing devices, there is a main playing device (such as Playing device 1) which can establish connection with the wireless routing device in a wireless or wired manner. After connecting with the wireless routing device, a control application installed terminal can control the main playing device and then further control other playing devices via the main playing device to play.

Based on the system architecture illustrated in FIG. 1, a grouping control method of a playing device is provided according to an embodiment of the present disclosure. FIG. 2 is a flowchart illustrating the grouping control method. As illustrated in FIG. 2, the grouping control method can include the following steps.

S201, a terminal receives a grouping command; the grouping command is configured to require adding a target playing device in a playing device list into a target group.

In at least one embodiment of the present disclosure, the terminal can include but not limited to smart phone, handheld computer (PDA), laptop computer, desktop computer, and the like. The operating system of the terminal can include but not limited to Android operating system, IOS operating system, Symbian operating system, BlackBerry operating system, Windows Phone 8 operating system and the like. The present disclosure is not limited thereto.

As one implementation, a user can deploy multiple playing devices at home arbitrarily. For example, these playing devices can be placed in different rooms, for instance, Playing device 1 and Playing device 2 are placed in a living room; Playing device 3 is placed in a bedroom; Playing device 4 is placed in a study room. These playing devices establish a communication connection among each other via a wireless manner (such as AD-HOC network form or MESH network form) to form an internal network. According to embodiments of the present disclosure, the playing device list includes all playing devices searched by the terminal within the internal network. The user can select one or more playing devices from the playing device list to conduct grouping operation.

In this embodiment, the target playing device can be any playing device in the playing device list, and the present disclosure is not limited thereto.

S202, the terminal responds to the grouping command, and detects a working state of the target playing device.

After the grouping command is received, the terminal will respond to the grouping command and detect the working state of the target playing device. Wherein the working state can include but not limited to a standby state, a playing state, a disconnection state and so on, the present disclosure is not limited thereto. If the playing device is in the standby state, no operation will be performed and systems and all hardware of the playing device are turned off, and the device will wait for a start command. The playing device will be in the playing state if a multimedia file is being played. The playing device will be in the disconnection state if no connection is established with a terminal.

S203, the terminal adds the target playing device to the target group according to the working state.

The terminal can set grouping rules corresponding to different working states in advance. After obtaining the working state of the target playing device, the terminal will perform grouping operation on the target playing device in accordance with a grouping rule corresponding to the working state of the target playing device.

As an example, the process of adding the target playing device to the target group according to the working state can be implemented as follows.

11) If the working state is the standby state, the terminal adds the target playing device to the target group.

That is to say, if it is detected that the working state of the target playing device is the standby state, the terminal will add the target playing device to the target group directly.

After adding the target playing device to the target group, the terminal can further perform the following process.

12) A start command is sent to the target playing device so as to start the target playing device.

In this example, if the target playing device is the main playing device, the terminal will send the start command to the target playing device directly; if the target playing device is not the main playing device, the terminal will send the start command to the main playing device, such that the main playing device can transfer the start command to the target playing device.

After receiving the start command, the target playing device will respond to the start command and start the closed system and hardware to enter into a start state.

In practical application, after grouping is preformed on the playing device, the terminal will use the playing device of a group to play multimedia files immediately. After a playing device in the standby state is added to the group, if the user wants to control the playing device in the standby state to play the multimedia files, the user has to start the playing device in the standby state manually, and then the playing device can be controlled after starting. Obviously, it is not easy for the user to conduct playing device control quickly. In this embodiment, by sending the start command to the target playing device after the target playing device in the standby state has been added to the target group, the target playing device can enter into the start state, thus avoiding the user to start a standby playing device manually and the user can control the target playing device quickly. As a result, it is convenient for the user to control the playing device, and the user experience can be improved.

As an example, the process of adding the target playing device to the target group according to the working state can be implemented as follows.

21) If the working state is the playing state, the terminal will detect whether the terminal per se is a control terminal that controls the target playing device to play.

22) If the terminal per se is the control terminal, it will add the target playing device to the target group.

In the embodiment, within a network, any terminal connected with the target playing device can control the target playing device to play. But at the same time point, only one terminal is capable of controlling the target playing device.

In the embodiment, if it is detected that the working state of the target playing device is the playing state, the terminal will detect whether the terminal per se is the control terminal that controls the target playing device to play. If the terminal is the control terminal, it will add the target playing device to the target group; otherwise, if the terminal is not the control terminal, it will be prohibited to add the target playing device to the target group.

In practical application, suppose Terminal A is controlling the target playing device to play; after the target playing device is added to the target group by Terminal B, control on the target playing device by Terminal A will be interrupted if Terminal B attempts to control the target playing device in the target group for playing, and as a result, user experience will be affected. With aid of the technical schemes of the present disclosure, the terminal will add the target playing device to the target group only if it is detected that the terminal per se is the control terminal that currently controls the target playing device to play, it helps to reduce the probability of control conflict and improve the user experience.

As another example, the process of adding the target playing device to the target group according to the working state can be implemented as follows.

31) If the working state is the disconnection state, the terminal will send a connection request to the target playing device;

32) Upon receiving a connection permit command sent by the target playing device in response to the connection request, the terminal will establish a connection with the target playing device and add the target playing device to the target group.

In this example, if it is detected that the working state of the target playing device is the disconnection state, the terminal will send the connection request to the target playing device; after receiving the connection permit command sent from the target playing device in response to the connection request, the terminal will establish a connection with the target playing device according to the connection permit command, and add the target playing device to the target group.

As one implementation, if the working state is the disconnection state, the terminal can add the target playing device to the target group first, and then send the connection request to the target playing device to establish a connection therewith.

In practice, after grouping is preformed on the playing device, the terminal will use the playing device of a group to play multimedia files immediately. After a playing device in the disconnect state is added to the group, if the user wants to control the playing device in the disconnected state to play the multimedia files, the user has to connect the playing device in the disconnected state manually, and then the playing device can be controlled after starting. Obviously, it is not convenient for the user to quickly control the playing device. In this example, by connecting the target playing device automatically before grouping, manual connection of the playing device by the user can be avoided, thus, the user can control the target playing device quickly. The technical schemes of the present disclosure provide the user with convenience to control the playing device, and the user experience can be improved.

In the method as illustrated in FIG. 2, after receiving the grouping command for adding the target playing device in the playing device list to the target group, in response thereto, the terminal will detect the working state of the target playing device and add the target playing device to the target group according to the working state. Therefore, it is possible for the terminal to perform grouping operation on the playing device flexibly according to the working state thereof.

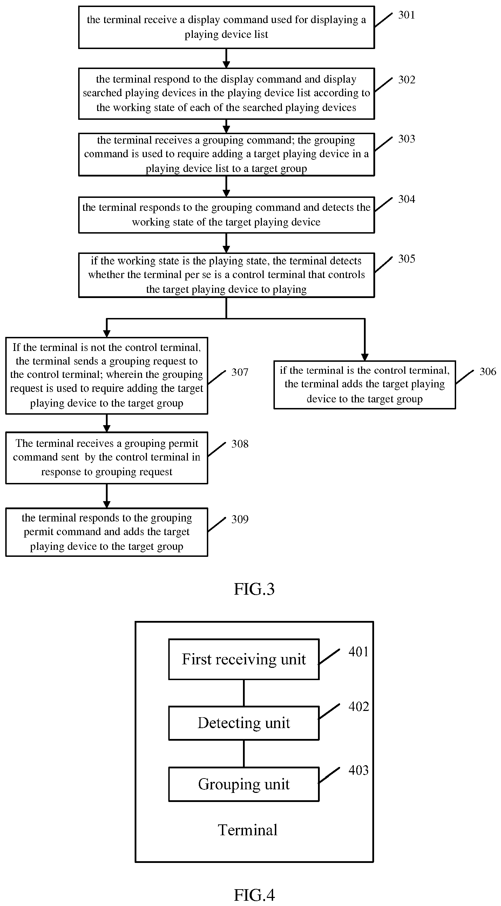

Based on the system architecture illustrated in FIG. 1, the present disclosure provides another grouping control method of a playing device. FIG. 3 is a flowchart illustrating the grouping control method. As illustrated in Figure 3, the grouping control method can include the following steps:

S301, the terminal receives a display command for displaying a playing device list.

In this embodiment, when a user wants to perform grouping operation on a playing device(s), the user can open the playing device list and select one or more playing devices to be grouped from the playing device list. As one implementation, in order to input the display command, the user can click a function button provided on the terminal, wherein the function button is configured to display the playing device list. As another implementation, the terminal can detect a touch operation of the user at a touch area, if the terminal detects that a multi-touch operation is performed for a preset number of times at the touch area by user, the terminal will be triggered to receive the display command configured to display the playing device list.

S302, the terminal responds to the display command and displays searched playing devices in categories in the playing device list according to the working state of each of the searched playing devices.

In this embodiment, after the display command is received, the terminal will respond to the display command, search playing devices within the network and detect the working state of each playing device. The working state may include but not limited to a standby state, a playing state, a disconnection state and so on, and the present disclosure is not limited thereto. After obtaining the working state of each playing device, the terminal will display each playing device according to the working state thereof respectively. For example, suppose Playing device land Playing device 2 are in the playing state, Playing device 3 and Playing device 4 are in the standby state, then the terminal can display icons of Playing device 1 and Playing device 2 in the same color and prompt that Playing device 1 and Playing device 2 are in the playing state; similarly, the terminal can display icons of Playing device 3 and Playing device 4 in another same color and prompt that Playing device 3 and Playing device 4 are in the playing state. By displaying each playing device according to the working state respectively in the playing device list, the user can know the working state of each playing device in the playing device list quickly, and it is convenient for the user to control various playing devices.

S303, the terminal receives a grouping command; the grouping command is configured to require adding a target playing device in a playing device list into a target group.

In one embodiment of the present disclosure, the target playing device can be any playing device in the playing device list. After the terminal displaying the playing devices according to their working state, the user can choose one or more playing devices from the playing device list to perform grouping operation.

S304, the terminal responds to the grouping command and detects the working state of the target playing device.

S305, if the working state is the playing state, the terminal detects whether the terminal per se is a control terminal that controls the target playing device to play.

S306, if the terminal is the control terminal, the terminal adds the target playing device to the target group.

S307, if the terminal is not the control terminal, the terminal sends a grouping request to the control terminal; wherein the grouping request is configured to require adding the target playing device to the target group.

As one implementation, if the terminal per se is not the control terminal, the terminal can send a terminal ID (identification) acquisition command to the target playing device. If the target playing device is not the main playing device, the terminal can send the terminal ID acquisition command to the main playing device such that the main playing device can transfer the terminal ID acquisition command to the target playing device. After receiving the terminal ID acquisition command, the target playing device will acquire the ID information of the control terminal that currently controls the target playing device to play, and send the ID information to the main playing device, such that the main playing device can transmit the ID information to the terminal. After receiving the ID information, the terminal will send the grouping request to the control terminal according to the ID information. The ID information may be a MAC address, an IP address, and the like of the terminal, the present disclosure is not limited thereto.

As another implementation, the terminal can also send the terminal ID acquisition command via a cloud server in order to obtain ID information of the control terminal. After the terminal ID acquisition command is received, the cloud server will respond to the terminal ID acquisition command and obtain the ID information of the control terminal that currently controls the target playing device to play and return the ID information obtained to the terminal.

S308, the terminal receives a grouping permit command sent by the control terminal in response to grouping request.

In this embodiment, after receiving the grouping request sent by the terminal, the control terminal will output prompt information for prompting the user of whether the terminal is allowed to add the target playing device into the target group. If the control terminal receives a confirmation that input in response to the prompt information by user, it will send the grouping permit command to the terminal.

S309, the terminal responds to the grouping permit command and adds the target playing device to the target group.

As can be seen in this embodiment, the terminal can add the target playing device to the target group according to the grouping permit command received.

In practice, the user of the terminal may have an urgent need for some reason to perform grouping operation on the target playing device; through the implementation of the embodiment depicted in FIG. 3, if the terminal detects that the control terminal is controlling the target playing device to play, the terminal will send the grouping request to the control terminal and add the target playing device to the target group if grouping is authorized by the control terminal, whereby success rate of grouping by the terminal is improved and the process is more personalized.

Based on the system architecture illustrated in FIG. 1, a terminal is provided according to an embodiment of the present disclosure. FIG. 4 is a structure schematic diagram illustrating the terminal. As illustrated in FIG. 4, the terminal can include a first receiving unit 401, a detecting unit 402, and a grouping unit 403.

The first receiving unit 401 is configured to receive a grouping command for adding a target playing device in a playing device list to a target group.

In at least one embodiment, the terminal can include but not limited to smart phone, handheld computer (PDA), laptop computer, desktop computer, and the like. The operating system of the terminal can include but not limited to Android operating system, IOS operating system, Symbian operating system, BlackBerry operating system, Windows Phone8 operating system, and the like. The present disclosure is not limited thereto.

As one implementation, a user can deploy multiple playing devices at home arbitrarily. For example, these playing devices can be placed in different rooms, for instance, Playing device 1 and Playing device 2 are placed in a living room; Playing device 3 is placed in a bedroom; Playing device 4 is placed in a study room. These playing devices establish a communication connection among each other via a wireless manner (such as AD-HOC network form or MESH network form) to form an internal network. According to embodiments of the present disclosure, the playing device list includes all playing devices searched by the terminal within the internal network. The user can select one or more playing devices from the playing device list to conduct grouping operation.

In this embodiment, the target playing device can be any playing device in the playing device list, and the present disclosure is not limited thereto.

The detecting unit 402 is configured to respond to the grouping command and detect a working state of the target playing device.

After the grouping command is received by the first receiving unit 401, the detecting unit 402 will respond to the grouping command and detect the working state of the target playing device. Wherein the working state can include but not limited to a standby state, a playing state, a disconnection state and so on, the present disclosure is not limited thereto. If the playing device is in the standby state, no operation will be performed and systems and all hardware of the playing device are turned off, and device will wait for a start command. The playing device will be in the playing state if a multimedia file is being played. The playing device will be in the disconnection state if no connection is established with a terminal.

The grouping unit 403 is configured to add the target playing device to the target group according to the working state.

The terminal can set grouping rules corresponding to different working states in advance. After obtaining the working state of the target playing device by the detecting unit 402, the grouping unit 403 will perform grouping operation on the target playing device in accordance with a grouping rule corresponding to the working state of the target playing device.

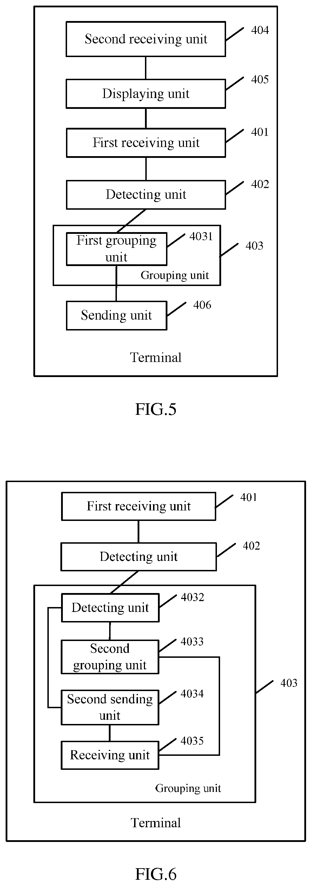

Further refer to FIG. 5, which is a structure schematic diagram illustrating another terminal according to an embodiment. The terminal illustrated in FIG. 5 is an improvement of the terminal illustrated in FIG.4. Compared with the terminal of FIG. 4, in addition to all of the units illustrated in FIG. 4, the terminal illustrated in FIG. 5 further includes a second receiving unit 404, a displaying unit 405, and a sending unit 406; moreover, the grouping unit 403 includes a first grouping unit 4031.

The second receiving unit 404 is configured to receive a display command for displaying the playing device list, before the grouping command is received by the first receiving unit 401, wherein the grouping command is configured to add the target playing device in the playing device list to the target group.

In this embodiment, when a user wants to perform grouping operation on a playing device(s), the user can open the playing device list and select one or more playing devices to be grouped from the playing device list. As one implementation, in order to input the display command, the user can click a function button, which is configured to display the playing device list, provided on the terminal. As another implementation, the terminal can detect a touch operation of the user at a touch area, if the terminal detects that a multi-touch operation is performed for a preset number of times at the touch area by user, the second receiving unit 404 will be triggered to receive the display command configured to display the playing device list.

The displaying unit 405 is configured to respond to the display command and display searched playing devices in the playing device list according to the working state of each of the searched playing devices.

In this embodiment, after the display command is received by the second receiving unit 404, the displaying unit 405 will respond to the display command and search playing devices within the network and detect the working state of each playing device. The working state may include but not limited to a standby state, a playing state, a disconnection state and so on, the present disclosure is not limited thereto. After obtaining the working state of each playing device, the displaying unit 405 will display each playing device according to the working state thereof. For example, suppose Playing device 1 and Playing device 2 are in the playing state, Playing device 3 and Playing device 4 are in the standby state, then the displaying unit 405 can display icons of Playing device 1 and Playing device 2 in the same color and prompt that Playing device 1 and Playing device 2 are in the playing state; similarly, the displaying unit 405 can display icons of Playing device 3 and Playing device 4 in another same color and prompt that Playing device 3 and Playing device 4 are in the playing state. By displaying each playing device in the playing device list according to the working state respectively, the user can know the working state of each playing device in the playing device list quickly, and it is convenient for the user to control various playing devices.

The first grouping unit 4031 is configured to add the target playing device to the target group if the working state of the target playing device is the standby state.

If the detecting unit 402 detects that the working state of the target playing device is the standby state, the first grouping unit 4031 can add the target playing device to the target group directly.

The sending unit 406 is configured to send a start command to the target playing device so as to start the target playing device, after the target playing device in the standby state has been added to the target group by the first grouping unit 4031.

In the embodiment of the present disclosure, if the target playing device is the main playing device, the sending unit 406 can sent the start command directly to the target playing device; if the target playing device is not the main playing device, the sending unit 406 can send the start command to the main playing device such that the main playing device can transfer the start command to the target playing device.

According to the embodiment of the present disclosure, after the start command is received, the target playing device will respond to the command and start the closed system and hardware to enter into a start state.

In practice, after grouping is preformed on the playing device, the terminal will use the playing device of a group to play multimedia files immediately. After a playing device in the standby state is added to the group, if the user wants to control the playing device in the standby state to play the multimedia files, the user has to start the playing device in the standby state manually, and then the playing device can be controlled after starting. Obviously, it is not easy for the user to conduct playing device control quickly. In this embodiment, by sending the start command to the target playing device after the target playing device in the standby state has been added to the target group, the target playing device can enter into the start state, thus avoiding the user to start a standby playing device manually and the user can control the target playing device quickly. As a result, it is convenient for the user to control the playing device, and the user experience can be improved.

Further refer to FIG. 6, which is a structure schematic diagram illustrating another terminal according to an embodiment of the present disclosure. The terminal illustrated in FIG. 6 is an improvement of the terminal illustrated in FIG.4. Compared with the terminal of FIG. 4, the terminal illustrated in FIG. 6 includes all of the units illustrated in FIG. 4, and the grouping unit 403 further includes a detecting unit 4032, a second grouping unit 4033, a second sending unit 4034, and a receiving unit 4035.

The detecting unit 4032 is configured to detect whether the terminal per se is a control terminal that controls the target playing device to play if the working state is a playing state.

The second grouping unit 4033 is configured to add the target playing device to the target group if it is detected by the detecting unit 4032 that the terminal is the control terminal.

In the embodiment of the present disclosure, in the network, any terminal connecting with the target playing device can control the target playing device to play. However, only one terminal can control the target playing device at the same time point.

As an implementation, the detecting unit 4032 will detect whether the terminal is the control terminal that currently controls the target playing device to play if it is detected that the working state of the target playing device is the playing state. If the terminal is the control terminal, the second grouping unit 4033 can add the target playing device to the target group. Otherwise, if the terminal is not the control terminal, the second sending unit 4034 can send a grouping request to the control terminal, wherein the grouping request is used to require adding the target playing device to the target group.

The second sending unit 4034 is configured to send the grouping request to the control terminal if the terminal per se is not the control terminal, wherein the grouping request is used to require adding the target playing device to the target group.

In the embodiment, optionally, if the terminal per se is not the control terminal, the terminal can send a terminal ID (identification) acquisition command to the target playing device. If the target playing device is not the main playing device, the terminal can send the terminal ID acquisition command to the main playing device such that the main playing device can transfer the terminal ID acquisition command to the target playing device. After receiving the terminal ID acquisition command, the target playing device will acquire the ID information of the control terminal that currently controls the target playing device to play, and send the ID information to the main playing device, such that the main playing device can transmit the ID information to the terminal. After receiving the ID information, the second sending unit 4034 will send the grouping request to the control terminal according to the ID information. The ID information may be a MAC address, IP address, and the like of the terminal, the present disclosure is not limited thereto.

As another implementation, the terminal can also send the terminal ID acquisition command via a cloud server in order to obtain ID information of the control terminal. The cloud server will respond to the terminal ID acquisition command received and obtain the ID information of the control terminal that currently controls the target playing device to play, and return the ID information obtained to the terminal.

The receiving unit 4035 is configured to receive a grouping permit command sent by the control terminal in response to grouping request.

In this embodiment, after receiving the grouping request sent by the terminal, the control terminal will output prompt information for prompting the user of whether the terminal is allowed to add the target playing device to the target group. If the control terminal receives a confirmation that input in response to the prompt information by user, it will send the grouping permit command to the terminal.

The second grouping unit 4033 is further configured to add the target playing device to the target group according to the grouping permit command.

As can be seen in this embodiment, the second grouping unit 4033 can add the target playing device to the target group according to the grouping permit command after the command is received by the receiving unit 4035.

In practical application, suppose Terminal A is controlling the target playing device to play; after the target playing device is added to the target group by Terminal B, control on the target playing device by Terminal A will be interrupted if Terminal B attempts to control the target playing devices in the target group for playing, and as a result, user experience will be affected. With aid of the technical scheme of the present disclosure, the terminal will add the target playing device to the target group only if it is detected that the terminal per se is the control terminal that currently controls the target playing device to play, it helps to reduce the probability of control conflict and improve the user experience.

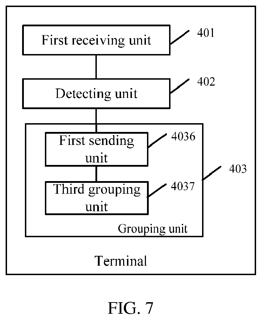

Further refer to FIG 7, which is a structure schematic diagram illustrating another terminal according to an embodiment of the present disclosure. The terminal illustrated in FIG. 7 is an improvement of the terminal illustrated in FIG.4. Compared with the terminal of FIG. 4, the terminal illustrated in FIG. 7 includes all of the units illustrated in FIG. 4, and the grouping unit 403 further includes a first sending unit 4036 and a third grouping unit 4037.

The first sending unit 4036 is configured to send a connection request to the target playing device if the working state is the disconnection state.

The third grouping unit 4037 is configured to establish a connection with the target playing device and add the target playing device to the target group upon receiving a connection permit command sent by the target playing device in response to the connection request.

As can be seen from the embodiment, if the detecting unit 402 detects that the target playing device is in the disconnection state, the first sending unit 4036 will send the connection request to the target playing device; after receiving the connection permit command sent by the target playing device in response to the connection request, the third grouping unit 4037 can establish a connection with the target playing device according to the connection permit command, and add the target playing device to the target group.

As one implementation, if the working state is the disconnection state, the terminal can add the target playing device to the target group first, and then send the connection request to the target playing device to establish a connection therewith.

In practice, after grouping is preformed on the playing device, the terminal will use the playing device of a group to play multimedia files immediately. After a playing device in the disconnect state is added to the group, if the user wants to control the playing device in the disconnected state to play the multimedia files, the user has to connect the playing device in the disconnected state manually, and then the playing device can be controlled after starting. Obviously, it is not convenient for the user to quickly control the playing device. In this example, by connecting the target playing device automatically before grouping, manual connection of the playing device by the user can be avoided, thus, the user can control the target playing device quickly. The technical schemes of the present disclosure provide the user with convenience to control the playing device, and the user experience can be improved.

In the terminal illustrated in FIG. 4 to FIG. 7, the first receiving unit is configured to receive the grouping command for adding the target playing device in the playing device list to the target group; the detecting unit is configured to respond to the grouping command and detect the working state of the target playing device; the grouping unit is configured to add the target playing device to the target group according to the working state of the target playing device. It can be seen that via technical schemes of the embodiments of the present disclosure, it is possible for the terminal to perform grouping operation on the playing device according to the working state flexibly.

It should be noted that, for each method of the aforementioned embodiments, for ease of description, it has been referred to as a combination of a series of actions, those skilled in the art should be aware that this disclosure is not restricted by the sequence of the actions, in contrast, some steps can be performed in other sequence or simultaneously. In addition, those skilled in the art should also be aware that the embodiments described herein are exemplary implementations only, operations and units involved are not necessarily for the implementation of the present disclosure.

Steps of the method of the present disclosure can be sequential adjusted, combined, or deleted according to actual needs.

Modules or units of the terminal of the present disclosure can be combined, divided, and deleted according to actual needs.

Those skilled in the art should be appreciated that all or part of the steps in the above-described method embodiments can be completed through hardware related equipments which are instructed via a program, the program may be stored in a machine-readable storage medium, among which the storage medium may include flash disk, read only memory (ROM), random access memory (RAM), magnetic disk or CD.

The foregoing descriptions are merely preferred embodiments of the present disclosure, rather than limiting the present disclosure. Various modifications and alterations may be made to the present disclosure for those skilled in the art.

## Claims

1. A grouping control method for a playing device of a wireless music system, the wireless music system comprising a plurality of playing devices, the method being performed by a terminal and comprising:
receiving a grouping command for adding a target playing device in a playing device list to a target group, wherein the playing device list comprises the plurality of playing devices of the wireless music system;
responding to the grouping command, and detecting a working state of the target playing device, wherein the working state comprises a standby state, a playing state, and a disconnection state; wherein the disconnection state is defined as that there is no connection between the target playing device and the terminal; and
adding the target playing device to the target group according to a grouping rule corresponding to the working state, comprising:
if the working state is the playing state, detecting whether the terminal is a control terminal that controls the target playing device to play, and adding the target playing device to the target group only if the terminal is the control
terminal;
if the working state is the disconnection state, sending a connection request to the target playing device, and establishing a connection with the target playing device and adding the target playing device to the target group upon receiving a connection permit command sent by the target playing device in response to the connection request;
if the working state is the standby state, adding the target playing device to the target group, and sending a start command to the target playing device so as to start the target playing device.

2. The method of claim 1, wherein if the working state is the playing state, the method further comprises:
sending a grouping request to the control terminal so as to require adding the target playing device to the target group, if the terminal is not the control terminal;
receiving a grouping permit command sent by the control terminal in response to the grouping request; and
adding the target playing device to the target group according to the grouping permit command.

3. The method of any of claims 1 to 2, wherein before the process of receiving the grouping command for adding the target playing device in the playing device list to the target group, the method further comprises:
receiving a display command for displaying the playing device list; and
responding to the display command, and displaying searched playing devices in the playing device list according to the working state of each of the searched playing devices.

4. A terminal comprising:
a first receiving unit configured to receive a grouping command for adding a target playing device in a playing device list to a target group, wherein the playing device list comprises a plurality of playing devices of a wireless music system;
a detecting unit configured to respond to the grouping command and detect a working state of the target playing device, wherein the working state comprises a standby state, a playing state, and a disconnection state; wherein the disconnection state is defined as that there is no connection between the target playing device and the terminal; and
a grouping unit configured to add the target playing device to the target group according to a grouping rule corresponding to the working state, comprising;
if the working state is the playing state, detecting whether the terminal is a control terminal that controls the target playing device to play, and adding the target playing device to the target group only if it is detected by the detecting
unit that the terminal is the control terminal;
if the working state is the disconnection state, sending a connection request to the target playing device, and establishing a connection between the terminal and the target playing device and adding the target playing device to the target group upon receiving a connection permit command sent by the target playing device in response to the connection request;
if the working state is the standby state, adding the target playing device to the target group, and sending a start command to the target playing device so as to start the target playing device.

5. The terminal of claim 4, wherein the grouping unit is further configured to:
send a grouping request to the control terminal so as to require adding the target playing device to the target group, if the terminal is not the control terminal; and
receive a grouping permit command sent by the control terminal in response to the grouping request; and
add the target playing device to the target group according to the grouping permit command.

6. The terminal of any of claims 4 to 5, further comprising:
a receiving unit configured to receive a display command for displaying the playing device list, before the grouping command for adding the target playing device in the playing device list to the target group is received by the first receiving unit; and
a displaying unit configured to display searched playing devices in the playing device list according to the working state of each of the searched playing devices in response to the display command.

## Patentansprüche

1. Gruppierungssteuerungsverfahren für eine Spielvorrichtung eines drahtlosen Musiksystems, wobei das drahtlose Musiksystem eine Mehrzahl von Spielvorrichtungen umfasst, und das Verfahren von einem Endgerät durchgeführt wird und umfasst:
Empfangen eines Gruppierungsbefehls zum Hinzufügen einer Ziel-Spielvorrichtung in einer Spielvorrichtungsliste zu einer Zielgruppe, wobei die Spielvorrichtungsliste die Mehrzahl von Spielvorrichtungen des drahtlosen Musiksystems umfasst;
Antworten auf den Gruppierungsbefehl und Erkennen eines Betriebszustands der Ziel-Spielvorrichtung, wobei der Betriebszustand einen Bereitschaftszustand, einen Spielzustand und einen Trennungszustand umfasst; wobei der Trennungszustand als der definiert ist, in dem keine Verbindung zwischen der Ziel-Spielvorrichtung und dem Endgerät besteht; und
Hinzufügen der Ziel-Spielvorrichtung zur Zielgruppe gemäß einer Gruppierungsregel, die dem Betriebszustand entspricht und umfasst:
Erkennen, wenn der Betriebszustand der Spielzustand ist, ob das Endgerät ein Steuerungsendgerät ist, das die Ziel-Spielvorrichtung zum Spielen steuert, und Hinzufügen der Ziel-Spielvorrichtung zur Zielgruppe nur dann, wenn das Endgerät die Steuerungsendgerät ist;
Senden, wenn der Betriebszustand der Trennungszustand ist, einer Verbindungsanforderung an die Ziel-Spielvorrichtung und Herstellen einer Verbindung mit der Ziel-Spielvorrichtung und Hinzufügen der Ziel-Spielvorrichtung zur Zielgruppe bei Empfang eines Verbindungszulassungsbefehls, der von der Ziel-Spielvorrichtung in Reaktion auf die Verbindungsanforderung gesendet wird;
Hinzufügen, wenn der Betriebszustand der Bereitschaftszustand ist, der Ziel-Spielvorrichtung zur Zielgruppe und Senden eines Startbefehls an die Ziel-Spielvorrichtung, um die Ziel-Spielvorrichtung zu starten.

2. Verfahren nach Anspruch 1, wobei das Verfahren, wenn der Betriebszustand der Spielzustand ist, ferner umfasst:
Senden einer Gruppierungsanforderung an das Steuerungsendgerät, um ein Hinzufügen der Ziel-Spielvorrichtung zur Zielgruppe anzufordern, wenn das Endgerät nicht das Steuerungsendgerät ist;
Empfangen eines Gruppierungszulassungsbefehls, der vom Steuerungsendgerät in Reaktion auf die Gruppierungsanforderung gesendet wird; und
Hinzufügen der Ziel-Spielvorrichtung zur Zielgruppe gemäß dem Gruppierungszulassungsbefehl.

3. Verfahren nach einem der Ansprüche 1 bis 2, wobei das Verfahren vor dem Prozess des Empfangens des Gruppierungsbefehls zum Hinzufügen der Ziel-Spielvorrichtung in der Spielvorrichtungsliste zur Zielgruppe ferner umfasst:
Empfangen eines Anzeigebefehls zum Anzeigen der Spielvorrichtungsliste; und
Antworten auf den Anzeigebefehl und Anzeigen gesuchter Spielvorrichtungen in der Spielvorrichtungsliste gemäß dem Betriebszustand jeder der gesuchten Spielvorrichtungen.

4. Endgerät, umfassend:
eine erste Empfangseinheit, die zum Empfangen eines Gruppierungsbefehls zum Hinzufügen einer Ziel-Spielvorrichtung in einer Spielvorrichtungsliste zu einer Zielgruppe konfiguriert ist, wobei die Spielvorrichtungsliste eine Mehrzahl von Spielvorrichtungen eines drahtlosen Musiksystems umfasst;
eine Erkennungseinheit, die zum Antworten auf den Gruppierungsbefehl und Erkennen eines Betriebszustands der Ziel-Spielvorrichtung konfiguriert ist, wobei der Betriebszustand einen Bereitschaftszustand, einen Spielzustand und einen Trennungszustand umfasst; wobei der Trennungszustand als der definiert ist, in dem keine Verbindung zwischen der Ziel-Spielvorrichtung und dem Endgerät besteht; und
eine Gruppierungseinheit, die so konfiguriert ist, dass sie die Ziel-Spielvorrichtung zur Zielgruppe gemäß einer Gruppierungsregel hinzufügt, die dem Betriebszustand entspricht und umfasst:
Erkennen, wenn der Betriebszustand der Spielzustand ist, ob das Endgerät ein Steuerungsendgerät ist, das die Ziel-Spielvorrichtung zum Spielen steuert, und Hinzufügen der Ziel-Spielvorrichtung zur Zielgruppe nur dann, wenn das Endgerät die Steuerungsendgerät ist;
Senden, wenn der Betriebszustand der Trennungszustand ist, einer Verbindungsanforderung an die Ziel-Spielvorrichtung und Herstellen einer Verbindung zwischen dem Endgerät und der Ziel-Spielvorrichtung und Hinzufügen der Ziel-Spielvorrichtung zur Zielgruppe bei Empfang eines Verbindungszulassungsbefehls, der von der Ziel-Spielvorrichtung in Reaktion auf die Verbindungsanforderung gesendet wird;
Hinzufügen, wenn der Betriebszustand der Bereitschaftszustand ist, der Ziel-Spielvorrichtung zur Zielgruppe und Senden eines Startbefehls an die Ziel-Spielvorrichtung, um die Ziel-Spielvorrichtung zu starten.

5. Endgerät nach Anspruch 4, wobei die Gruppierungseinheit ferner konfiguriert ist zum:
Senden einer Gruppierungsanforderung an das Steuerungsendgerät, um ein Hinzufügen der Ziel-Spielvorrichtung zur Zielgruppe anzufordern, wenn das Endgerät nicht das Steuerungsendgerät ist; und
Empfangen eines Gruppierungszulassungsbefehls, der vom Steuerungsendgerät in Reaktion auf die Gruppierungsanforderung gesendet wird; und
Hinzufügen der Ziel-Spielvorrichtung zur Zielgruppe gemäß dem Gruppierungszulassungsbefehl.

6. Endgerät nach einem der Ansprüche 4 bis 5, ferner umfassend:
eine Empfangseinheit, die so konfiguriert ist, dass sie vor dem Empfang des Gruppierungsbefehls zum Hinzufügen der Ziel-Spielvorrichtung in der Spielvorrichtungsliste zur Zielgruppe durch die erste Empfangseinheit einen Anzeigebefehl zum Anzeigen der Spielvorrichtungsliste empfängt; und
eine Anzeigeeinheit, die zum Anzeigen gesuchter Spielvorrichtungen in der Spielvorrichtungsliste gemäß dem Betriebszustand jeder der gesuchten Spielvorrichtungen in Reaktion auf den Anzeigebefehl konfiguriert ist.

## Revendications

1. Procédé de commande de groupement pour un dispositif de lecture d'un système musical sans fil, le système musical sans fil comprenant une pluralité de dispositifs de lecture, le procédé étant réalisé par un terminal et comprenant :
la réception d'une instruction de groupement pour ajouter un dispositif de lecture cible dans une liste de dispositifs de lecture à un groupe cible, la liste de dispositifs de lecture comprenant la pluralité de dispositifs de lecture du système de musique sans fil ;
la réponse à l'instruction de groupement, et la détection d'un état de fonctionnement du dispositif de lecture cible, l'état de fonctionnement comprenant un état de veille, un état de lecture, et un état de déconnexion ; l'état de déconnexion étant défini comme l'absence de connexion entre le dispositif de lecture cible et le terminal ; et
l'ajout du dispositif de lecture cible au groupe cible en fonction d'une règle de groupement correspondant à l'état de fonctionnement, comprenant :
si l'état de fonctionnement est l'état de lecture, la détection si le terminal est un terminal de commande qui commande le dispositif de lecture cible pour lire, et l'ajout du dispositif de lecture cible au groupe cible uniquement si le terminal est le terminal de commande ;
si l'état de fonctionnement est l'état de déconnexion, l'envoi d'une demande de connexion au dispositif de lecture cible, et l'établissement d'une connexion avec le dispositif de lecture cible et l'ajout du dispositif de lecture cible au groupe cible lors de la réception d'une instruction d'autorisation de connexion envoyée par le dispositif de lecture cible en réponse à la demande de connexion ;
si l'état de fonctionnement est l'état d'attente, l'ajout du dispositif de lecture cible au groupe cible, et l'envoi d'une instruction de démarrage au dispositif de lecture cible de manière à démarrer le dispositif de lecture cible.

2. Procédé selon la revendication 1, si l'état de fonctionnement est l'état de lecture, le procédé comprenant en outre :
l'envoi d'une demande de groupement au terminal de commande de façon à demander l'ajout du dispositif de lecture cible au groupe cible, si le terminal n'est pas le terminal de commande ;
la réception d'une instruction d'autorisation de groupement envoyée par le terminal de commande en réponse à la demande de groupement ; et
l'ajout du dispositif de lecture cible au groupe cible conformément à l'instruction d'autorisation de groupement.

3. Procédé selon l'une quelconque des revendications 1 et 2, avant le processus de réception de l'instruction de groupement pour ajouter le dispositif de lecture cible dans la liste de dispositifs de lecture au groupe cible, le procédé comprenant en outre :
la réception d'une instruction d'affichage pour afficher la liste de dispositifs de lecture ; et
la réponse à l'instruction d'affichage, et l'affichage des dispositifs de lecture recherchés dans la liste de dispositifs de lecture en fonction de l'état de fonctionnement de chacun des dispositifs de lecture recherchés.

4. Terminal comprenant :
une première unité de réception configurée pour recevoir une instruction de groupement pour ajouter un dispositif de lecture cible dans une liste de dispositifs de lecture à un groupe cible, la liste de dispositifs de lecture comprenant une pluralité de dispositifs de lecture d'un système de musique sans fil ;
une unité de détection configurée pour répondre à l'instruction de groupement et détecter un état de fonctionnement du dispositif de lecture cible, l'état de fonctionnement comprenant un état de veille, un état de lecture et un état de déconnexion ; l'état de déconnexion étant défini comme l'absence de connexion entre le dispositif de lecture cible et le terminal ; et
une unité de groupement configurée pour ajouter le dispositif de lecture cible au groupe cible en fonction d'une règle de groupement correspondant à l'état de fonctionnement, comprenant :
si l'état de fonctionnement est l'état de lecture, la détection si le terminal est un terminal de commande qui commande le dispositif de lecture cible pour lire, et l'ajout du dispositif de lecture cible au groupe cible uniquement s'il est détecté par l'unité de détection que le terminal est le terminal de commande ;
si l'état de fonctionnement est l'état de déconnexion, l'envoi d'une demande de connexion au dispositif de lecture cible, et l'établissement d'une connexion entre le terminal et le dispositif de lecture cible et l'ajout du dispositif de lecture cible au groupe cible à la réception d'une instruction d'autorisation de connexion envoyée par le dispositif de lecture cible en réponse à la demande de connexion ;
si l'état de fonctionnement est l'état de veille, l'ajout du dispositif de lecture cible au groupe cible, et l'envoi d'une instruction de démarrage au dispositif de lecture cible de manière à démarrer le dispositif de lecture cible.

5. Terminal selon la revendication 4, l'unité de groupement étant en outre configurée pour :
envoyer une demande de groupement au terminal de commande de façon à demander l'ajout du dispositif de lecture cible au groupe cible, si le terminal n'est pas le terminal de commande ; et
recevoir une instruction d'autorisation de groupement envoyée par le terminal de commande en réponse à la demande de groupement ; et
ajouter le dispositif de lecture cible au groupe cible conformément à l'instruction d'autorisation de groupement.

6. Terminal selon l'une quelconque des revendications 4 et 5, comprenant en outre :
une unité de réception configurée pour recevoir une instruction d'affichage pour afficher la liste de dispositifs de lecture, avant que l'instruction de groupement pour ajouter le dispositif de lecture cible dans la liste de dispositifs de lecture au groupe cible soit reçue par la première unité de réception ; et
une unité d'affichage configurée pour afficher les dispositifs de lecture recherchés dans la liste de dispositifs de lecture en fonction de l'état de fonctionnement de chacun des dispositifs de lecture recherchés en réponse à l'instruction d'affichage.
